# EUROPEAN PATENT APPLICATION

(11) **EP 4 844 977 A1**
(43) Date of publication of application: **25.11.2026**
(21) Application number: 26179379.8
(22) Date of filing: 18.05.2026
(51) Int. Cl.: H02J 7/65, B60L 3/00, B64D 27/357, H01M 10/48, H02H 7/18, H02J 7/60, H02J 105/30

(54) **THERMAL PROTECTION SYSTEM AND METHOD FOR AN AIRCRAFT BATTERY**

(30) Priority: 18.05.2025 US 202519211215
(71) Applicant: Pratt & Whitney Canada Corp., Longueuil, Québec J4G 1A1 (CA)
(72) Inventor: HANNA, Michael, J4G 1A1 (01BE5) Longueuil (CA); FANG, Jing, J4G 1A1 (01BE5) Longueuil (CA)
(74) Representative: Dehns

(57) **Abstract**

An aircraft battery assembly (24) includes a battery with battery strings (74) connected in parallel at a first main battery line (78A, 78B). A first battery string (74) includes a plurality of battery cells and is connected to the main line (78A, 78B) via a contactor (88A, 88B), which can be configured in open or closed states. A temperature sensor measures the temperature of one or more battery cells. A string controller (96, 98), in signal communication with the temperature sensor and operably coupled to the contactor (88A, 88B), selectively configures the contactor (88A, 88B) in the open or closed state. The controller (96, 98) receives a cell temperature threshold, compares it to the measured temperature, and opens the contactor (88A, 88B) if the temperature meets or exceeds the threshold. A processing system (100) executes a model (114) trained to determine the cell temperature threshold, dynamically calculating it using battery input data and transmitting the cell temperature threshold to the string controller (96, 98) to enable selective isolation of the first battery string (74).

## Description

### TECHNICAL FIELD

This invention relates generally to aircraft electrical systems including batteries and, more particularly, to thermal protection systems and methods for aircraft batteries.

### BACKGROUND

Propulsion system architectures for aircraft, such as hybrid-electric propulsion systems, may typically include one or more electrical assemblies configured to support various functions of the propulsion system and an associated aircraft. These electrical assemblies may frequently include batteries configured to provide electrical power for various electrical loads of the aircraft and its propulsion system(s). Various systems and methods for controlling and providing protective functions for these batteries are known. While these known systems and methods may be suitable for their intended purposes, there is always room in the art for improvement.

### SUMMARY

According to an aspect of the present invention, there is provided an assembly for an aircraft including a battery, a temperature sensor, a first contactor, a first string controller, and a processing system. The battery includes a plurality of battery strings configured to be electrically connected together in parallel at a first main battery line. The plurality of battery strings includes a first battery string. The first battery string includes a plurality of battery cells electrically connected together. The temperature sensor is operable to measure a temperature of one or more of the plurality of battery cells. The first contactor is electrically connected between the first battery string and the first main battery line. The first contactor is configurable in an open state and a closed state. The first string controller is connected in signal communication with the temperature sensor. The first string controller is operably coupled with the first contactor. The first string controller is operable to selectively configure the first contactor in the open state or the closed state. The first string controller is further operable to receive a cell temperature threshold, compare the temperature from the temperature sensor to the cell temperature threshold, and configure the first contactor in the open state in response to identifying the temperature is greater than or equal to the cell temperature threshold. The processing system includes a processor connected in signal communication with a non-transitory memory storing instructions which, when executed by the processor, cause the processor to execute a model trained to determine the cell temperature threshold, dynamically determine the cell temperature threshold with the model using battery input data for the battery, and transmit the cell temperature threshold to the first string controller.

Optionally, and in accordance with the above, the first string controller may be a simple electronic hardware (SEH) controller.

Optionally, and in accordance with any of the above, the battery input data may include operational data of the battery and one or both of historical battery data of the battery or specification data of the battery.

Optionally, and in accordance with any of the above, the operational data may include one or more of battery voltage data, battery current data, battery charging data, or battery discharging data.

Optionally, and in accordance with any of the above, the first battery string may include a plurality of battery substrings electrically connected together to form the first battery string, the plurality of battery substrings may include a first battery substring, and the first contactor may be electrically connected between the first battery substring and the first main battery line.

Optionally, and in accordance with any of the above, the assembly may further include a second contactor and a second string controller, the second contactor may be electrically connected between the first battery string and the first main battery line, the second contactor may be configurable in the open state and the closed state, the second string controller may be connected in signal communication with the temperature sensor, the second string controller may be operably coupled with the second contactor, the second string controller may be operable to selectively configure the second contactor in the open state or the closed state, the second string controller may be further operable to receive the cell temperature threshold, compare the temperature from the temperature sensor to the cell temperature threshold, and configure the second contactor in the open state in response to identifying the temperature is greater than or equal to the cell temperature threshold.

Optionally, and in accordance with any of the above, the assembly may further include a cockpit control system connected in signal communication with the first string controller, and the first string controller may be configured to generate and transmit a warning signal to the cockpit control system in response to the identifying the temperature is greater than or equal to the cell temperature threshold.

Optionally, and in accordance with any of the above, the assembly may further include a plurality of temperature sensors including the temperature sensor, the plurality of temperature sensors may be configured to measure the temperature of each of the plurality of battery cells, the first string controller may be connected in signal communication with each of the plurality of temperature sensors, the first string controller may be further operable to compare the temperature from each of the plurality of temperature sensors to the cell temperature threshold and configure the first contactor in the open state in response to identifying the temperature of any of the plurality of battery cells is greater than or equal to the cell temperature threshold.

Optionally, and in accordance with any of the above, the instructions, when executed by the processor, may further cause the processor to dynamically determine a contactor closing threshold with the model using the battery input data, and transmit the contactor closing threshold to the first string controller.

Optionally, and in accordance with any of the above, the assembly may further include a propulsor, an electric motor, and an electrical distribution system, the electric motor may be coupled with the propulsor, and the electrical distribution system may be configured to electrically interconnect the electric motor with the battery.

According to another aspect of the present invention, there is provided a thermal protection method for an aircraft battery including receiving, at a processor of a processing system, battery input data of a battery. The battery includes a plurality of battery strings configured to be electrically connected together in parallel at a first main battery line. Each of the plurality of battery strings includes a plurality of battery cells electrically connected together. The plurality of battery strings includes a first battery string. The thermal protection method further includes monitoring, with a first string controller, a temperature of one or more of a plurality of battery cells of the first battery string and a cell temperature threshold. The first string controller is operably coupled with a first contactor electrically connected between the first battery string and the first main battery line. The first contactor is configurable in an open state and a closed state. The thermal protection method further includes executing, by the processor, a model trained to determine the cell temperature threshold and dynamically determining the cell temperature threshold using the battery input data, transmitting, from the processor, the cell temperature threshold to the first string controller, comparing, by the first string controller, the temperature to the cell temperature threshold, and identifying, by the first string controller, a presence or an absence of an overtemperature condition, the presence of the overtemperature condition identified where the temperature is greater than or equal to the cell temperature threshold.

Optionally, and in accordance with the above, the first string controller may be a simple electronic hardware (SEH) controller.

Optionally, and in accordance with any of the above, the battery input data may include operational data of the battery and one or both of historical battery data of the battery or specification data of the battery.

Optionally, and in accordance with any of the above, the operational data may include one or more of battery voltage data, battery current data, battery charging data, or battery discharging data.

Optionally, and in accordance with any of the above, the first battery string may include a plurality of battery substrings electrically connected together to form the first battery string, the plurality of battery substrings may include a first battery substring, and the first contactor may be electrically connected between the first battery substring and the first main battery line.

Optionally, and in accordance with any of the above, the thermal protection method may further include monitoring, with a second string controller, the temperature of one or more of a plurality of battery cells of the first battery string and the cell temperature threshold. The second string controller may be operably coupled with a second contactor electrically connected between the first battery string and the first main battery line. The second contactor may be configurable in the open state and the closed state. The thermal protection method may further include controlling, by the second string controller, the second contactor in the open state in response to identifying the presence of the overtemperature condition.

Optionally, and in accordance with any of the above, the thermal protection method may further include executing, by the processor, the model trained to determine a contactor closing threshold and dynamically determining the contactor closing threshold using the battery input data and transmitting, from the processor, the contactor closing threshold to the first string controller.

Optionally, and in accordance with any of the above, the thermal protection method may further include driving a propulsor with an electric motor electrically connected with the battery while performing the steps of receiving the battery input data, monitoring the temperature, executing the model and dynamically determining the cell temperature threshold, comparing the temperature to the cell temperature threshold, and identifying the presence or the absence of the overtemperature condition.

According to another aspect of the present invention, there is provided an assembly for an aircraft including a battery, a temperature sensor, a first contactor, a first string controller, and a processing system. The battery includes a plurality of battery strings configured to be electrically connected together in parallel at a first main battery line. The plurality of battery strings includes a first battery string. The first battery string includes a plurality of battery cells electrically connected together. The temperature sensor is operable to measure a temperature of one or more of the plurality of battery cells. The first contactor is electrically connected between the first battery string and the first main battery line. The first contactor is configurable in an open state and a closed state. The first string controller is connected in signal communication with the temperature senso. The first string controller is operably coupled with the first contactor. The first string controller is operable to selectively configure the first contactor in the open state or the closed state. The first string controller is further operable to receive an overtemperature condition signal and, in response to receiving the overtemperature condition signal, configure the first contactor in the open state. The processing system includes a processor connected in signal communication with a non-transitory memory storing instructions which, when executed by the processor, cause the processor to execute a model trained to determine a cell temperature threshold, dynamically determine the cell temperature threshold with the model using battery input data for the battery, compare the temperature from the temperature sensor to the cell temperature threshold, and transmit the overtemperature condition signal to the first string controller in response to the temperature greater than or equal to the cell temperature threshold.

Optionally, and in accordance with the above, the first string controller may be a simple electronic hardware (SEH) controller.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

FIG. 1 illustrates an aircraft including a propulsion system, in accordance with one or more embodiments of the present disclosure.
FIG. 2 schematically illustrates a cutaway, side view of an aircraft propulsion system, in accordance with one or more embodiments of the present disclosure.
FIG. 3 schematically illustrates an electrical assembly for the aircraft propulsion system, said electrical assembly including a battery, in accordance with one or more embodiments of the present disclosure.
FIGS. 4A-B schematically illustrate battery string and substring assemblies of the battery, in accordance with one or more embodiments of the present disclosure.
FIG. 5 schematically illustrates a portion of a battery string including a plurality of battery cells, in accordance with one or more embodiments of the present disclosure.
FIG. 6 illustrates a block diagram depicting a thermal protection method for an aircraft battery, in accordance with one or more embodiments of the present disclosure.

### DETAILED DESCRIPTION

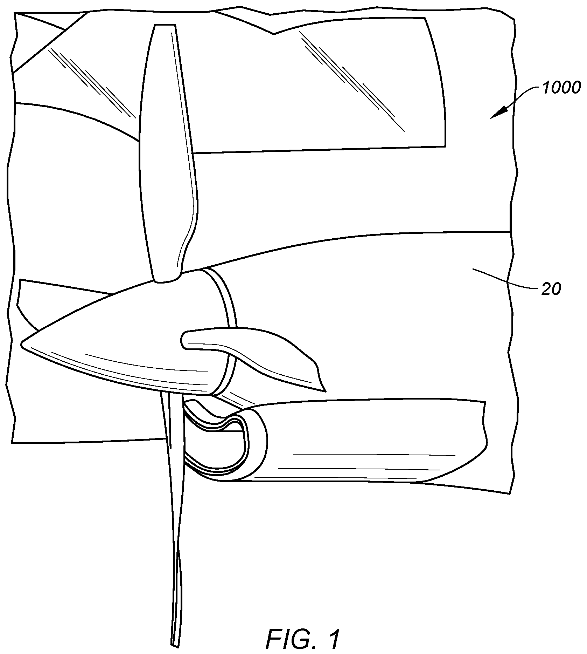

FIG. 1 illustrates an aircraft 1000 including at least one propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

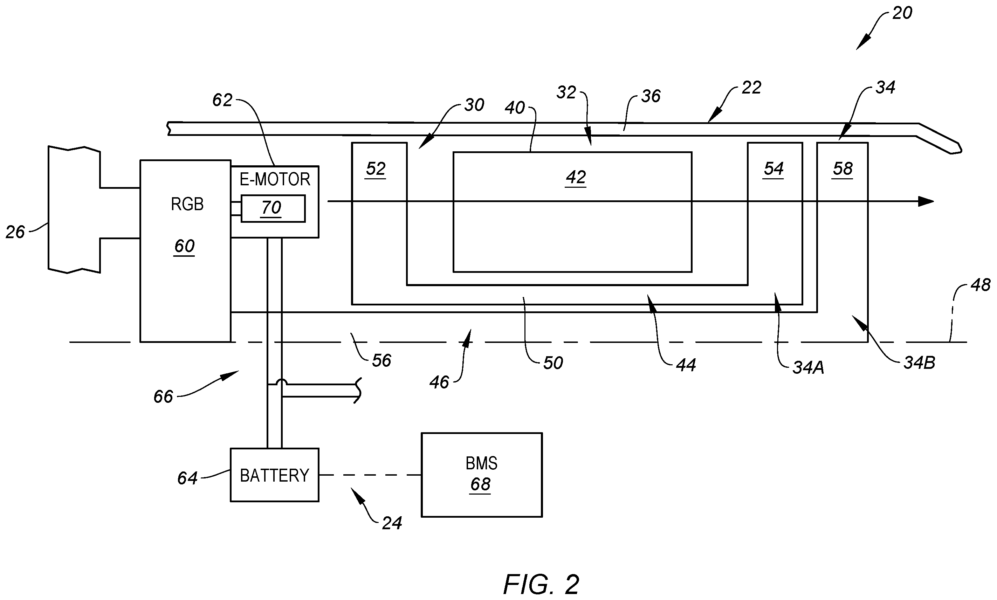

FIG. 2 schematically illustrates a cutaway, side view of the propulsion system 20. The propulsion system 20 of FIG. 2 includes an engine 22, an electrical assembly 24, a propulsor 26, and an engine controller 28. The engine 22 of FIG. 2 is configured as a turboprop gas turbine engine. However, the present disclosure is not limited to any particular configuration of gas turbine engine for the propulsion system 20, and examples of gas turbine engine configurations for the propulsion system 20 may include, but are not limited to, a turbofan engine, a turbojet engine, a propfan engine, or the like. Aspects of the present disclosure may be equally applicable to aircraft propulsion systems including other engine configurations such as, but not limited to, rotary engines, piston engines, and the like, or to electric aircraft propulsion systems (e.g., battery-electric propulsion systems, fuel-cell-electric propulsion systems, etc.). Aspects of the present disclosure may also be equally applicable to aircraft engines which are not part of a propulsion system, for example, an engine for an auxiliary power unit (APU).

The engine 22 of FIG. 2 includes a compressor section 30, a combustor section 32, a turbine section 34, and an engine static structure 36. The combustor section 32 includes a combustor 40 (e.g., an annular combustor). The combustor 40 forms a combustion chamber 42. The turbine section 34 includes a high-pressure turbine section 34A and a power turbine section 34B.

Components of the compressor section 30 and the turbine section 34 of FIG. 2 form a first rotational assembly 44 (e.g., a high-pressure spool) and a second rotational assembly 46 of the engine 22. The first rotational assembly 44 and the second rotational assembly 46 are mounted for rotation about a rotational axis 48 (e.g., an axial centerline) of the engine 22 relative to the engine static structure 36.

The first rotational assembly 44 includes a first shaft 50, a bladed compressor rotor 52 for the compressor section 30, and a bladed first turbine rotor 54 for the high-pressure turbine section 34A. The first shaft 50 interconnects the bladed compressor rotor 52 and the bladed first turbine rotor 54.

The second rotational assembly 46 of FIG. 2 includes a second shaft 56 and a bladed second turbine rotor 58 for the power turbine section 34B. The second shaft 56 is connected to the bladed second turbine rotor 58. The second shaft 56 operably connects (e.g., directly or indirectly connects) the bladed second turbine rotor 58 with the propulsor 26. For example, the second shaft 56 of FIG. 2 is coupled with the propulsor 26 by a gear box 60 (e.g., a reduction gear box (RGB)). The gear box 60 includes a gear assembly (e.g., an epicyclic gear assembly) coupling the second shaft 56 and the propulsor 26. The gear assembly may be a reduction gear assembly configured to drive rotation of the propulsor 26 at a reduced rotational speed relative to the second shaft 56. Of course, the second shaft 56 may alternatively be directly connected to the propulsor 26 to drive the propulsor 26 at the same rotational speed as the second shaft 56.

The engine static structure 36 includes engine casings, cowlings, and other fixed (e.g., non-rotating) structures of the engine 22 which house and/or support components of the engine 22 such as, but not limited to, those of the compressor section 30, the combustor section 32, and the turbine section 34. The engine static structure 36 includes one or more bearing assemblies and/or gear trains configured to rotationally support and/or interconnect components of the first rotational assembly 44 and the second rotational assembly 46.

The electrical assembly 24 of FIG. 2 includes an electric motor 62, a battery 64, an electrical distribution system 66, and a battery management system (BMS) 68.

The electric motor 62 is electrically connected to the electrical distribution system 66. The electric motor 62 includes a rotor 70. The rotor 70 is coupled to the propulsor 26 by the gear box 60. For example, the gear box 60 may couple both of the second shaft 56 and the rotor 70 to the propulsor 26 to facilitate driving rotation of the propulsor 26 with the bladed second turbine rotor 58 (e.g., via the second shaft 56), the electric motor 62 (e.g., the rotor 70), or a combination of the bladed second turbine rotor 58 and the electric motor 62. The electric motor 62 may additionally include or be electrically connected with to receive power from a motor control unit (e.g., an inverter) configured to control electric power characteristics (e.g., frequency, voltage, current) supplied to the electric motor 62 (e.g., windings of the electric motor 62), for example, to control a rotation speed and/or torque of the rotor 70.

The battery 64 is electrically connected to the electrical distribution system 66. The battery 64 is configured to selectively supply electrical power to the electrical distribution system 66 independently (e.g., as a single power source for the electrical assembly 24) or in combination with one or more other electrical power sources (e.g., an electrical generator). As will be discussed in further detail, the battery 64 may include a plurality of battery strings, battery substrings, battery modules, battery cells, and/or the like electrically connected together in series and/or parallel as necessary to configure the battery 64 with the desired electrical characteristics (e.g., voltage output, current output, storage capacity, etc.). The present disclosure is not limited to any particular configuration of the battery 64.

During operation of the propulsion system 20 of FIG. 2, ambient air enters the propulsion system 20 through an air intake into and through a core flow path of the engine 22. The ambient air flow along the core flow path is compressed in the compressor section 30 and directed into the combustor 40. Fuel is injected into the combustor 40 (e.g., the combustion chamber 42) and mixed with the compressed air to provide a fuel-air mixture. This fuel-air mixture is ignited, and combustion products thereof flow through the high-pressure turbine section 34A and the power turbine section 34B and are exhausted from the propulsion system 20. The bladed first turbine rotor 54 and the bladed second turbine rotor 58 rotationally drive the first rotational assembly 44 and the second rotational assembly 46, respectively, in response to the combustion gas flow through the high-pressure turbine section 34A and the power turbine section 34B. The second rotational assembly 46 (e.g., the second shaft 56) may drive rotation of the propulsor 26, for example, through the gear box 60. The electric motor 62 may be selectively operated (e.g., by the engine controller 28) to drive rotation of the propulsor 26 independently or in combination with the engine 22 through the gear box 60.

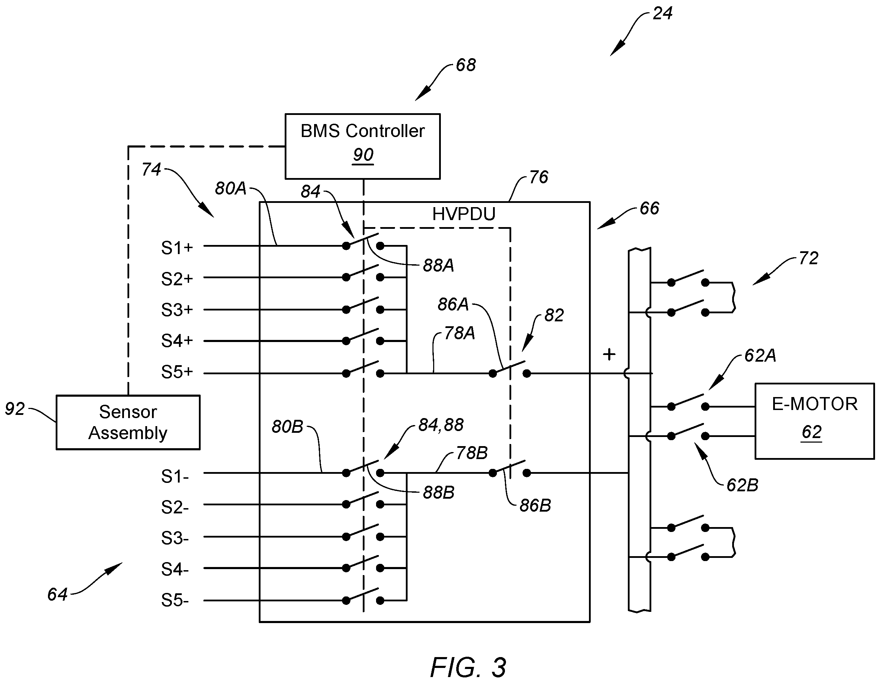

FIG. 3 schematically illustrates a portion of the electrical assembly 24 including the battery 64, the electrical distribution system 66, and the battery management system 68. The electrical assembly 24 is configured to supply electrical power to one or more electrical loads 72 of the propulsion system 20 (see FIG. 2) and/or the aircraft 1000 (see FIG. 1) such as, but not limited to, the electric motor 62. The battery 64 of FIG. 3 includes a plurality of battery strings 74 configured to be electrically connected together in parallel, for example, by the electrical distribution system 66. The battery strings 74 of FIG. 3 include five (5) battery strings 74, S1-5; however, the present disclosure is not limited to any particular quantity of the battery strings 74 of the battery 64.

The electrical distribution system 66 electrically interconnects components of the electrical assembly 24. The electrical distribution system 66 includes switchgear, cables, wires, breakers, switches, contactors, electrical power conditional and/or conversion (e.g., AC to DC or DC to AC conversion) components, and/or other electrical components to effect the transfer of electrical power between components of the electrical assembly 24. For example, the electrical distribution system 66 of FIG. 3 electrically connects the electric motor 62 (and other electrical loads 72) with the battery 64. The electrical distribution system 66 may additionally be electrically connected with other electric power sources (e.g., an electrical generator) of the electrical assembly 24. The electrical distribution system 66 may additionally include one or more electrical power controllers, for example, to control a magnitude and/or direction of electrical current flow to components of the electrical assembly 24. The electrical distribution system 66 is configured to supply electrical power to the electrical loads 72 of the aircraft 1000, the propulsion system 20, and/or the engine 22.

The electrical distribution system 66 of FIG. 3 includes a high-voltage power distribution unit (HVPDU) 76. The HVPDU 76 includes a positive main battery line 78A and a negative main battery line 78B. The HVPDU 76 additionally includes, for each of the battery strings 74, a positive string line 80A and a negative string line 80B. The main battery lines 78A, 78B electrically interconnect the battery strings 74 with the electrical loads 72. The string battery lines 80A, 80B electrically connect each of the battery strings 74 with the main battery lines 78A, 78B. For example, the positive string lines 80A (e.g., S1+, S2+, S3+, S4+, S5+) are electrically connected together at a positive battery line 78A and the negative string lines 80B (e.g., S1-, S2, S3-, S4-, S5-) are electrically connected together at the negative battery line 78B to electrically connect the battery strings 74 in parallel.

The HVPDU 76 further includes a main battery switch assembly 82 for the main battery lines 78A, 78B and a battery string switch assembly 84 for the string lines 80A, 80B of each of the battery strings 74. The main battery switch assembly 82 and the battery string switch assembly 84 of FIG. 3 each include electrical contactors configured to facilitate selective control of electrical current flow through the HVPDU 76, for example, along the main battery lines 78A, 78B and the string lines 80A, 80B. The contactors are selectively configurable (e.g., switchable) in and between a closed state or an open state to conduct or interrupt an electrical current flow, respectively. The contactors may include electrically-controlled relays or switches which may be controlled by an electrical control signal to position the respective contactors in the open state or the closed state. The present disclosure, switch assemblies 82, 84, however, are not limited to electrical contactors and other electrical power interruption devices, breakers, and switches may alternatively be used. The main battery switch assembly 82 and the battery string switch assembly 83 of FIG. 3 include main battery contactors 86A, 86B (collectively the main battery contactors 86) and string contactors 88A, 88B (collectively the string contactors 88) on each of the main battery lines 78A, 78B and the string lines 80A, 80B, respectively.

The battery management system 68 is configured to monitor, control, and facilitate protective functions for the battery 64. The battery management system 68 includes a BMS controller 90. The BMS controller 90 may be connected in electrical (e.g., signal) communication with each of the main battery contactors 86 and/or each of the string contactors 88 to control positions of the contactors 86, 88 in their closed and open positions. The battery management system 68 and its BMS controller 90 are configured to monitor conditions of the battery 64 such as, but not limited to, charging parameters, discharge parameters, state of charge, state of health, temperature, voltage, current, battery faults, arc discharges, and the like, to facilitate operation and control of the electrical assembly 24 and the battery 64. The battery management system 68 includes a battery sensor assembly 92 connected in signal communication with the BMS controller 90. The battery sensor assembly 92 may include temperature sensors, voltage sensors, current sensors, and the like at various locations of the battery 64 to facilitate battery monitoring and protection functions of the BMS controller 90.

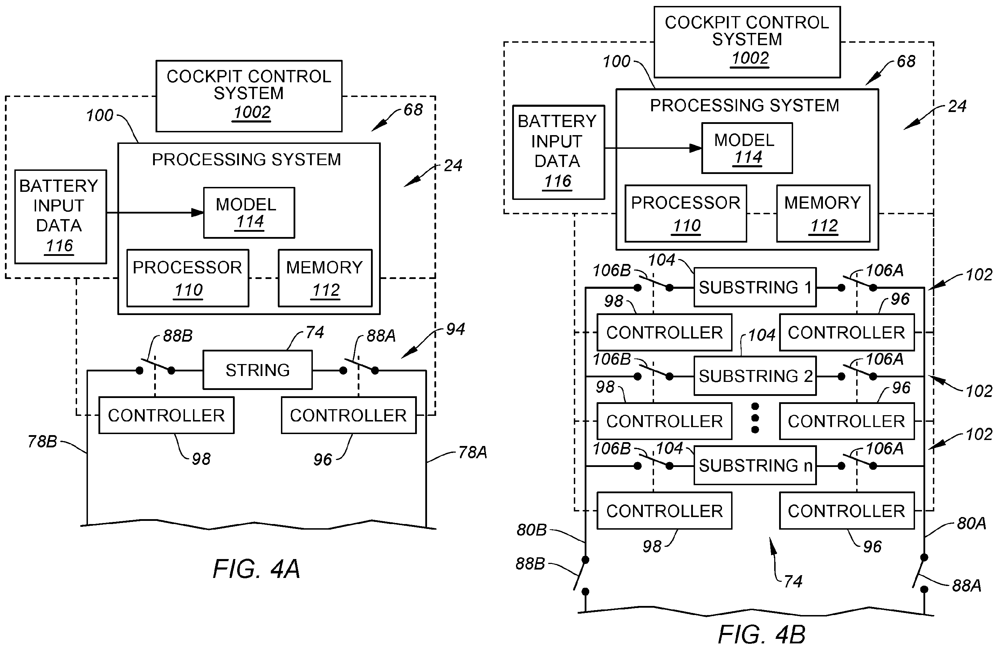

FIG. 4A schematically illustrates a string assembly 94 including one of the battery strings 74. As shown in FIG. 4A, the string assembly 94 may include a first string controller 96, a second string controller 98, and a processing system 100 of the battery management system 68. The first string controller 96 is operably coupled (e.g., electrically connected) with the first string contactor 88A. The first string controller 96 is operable to selectively configure the first string contactor 88A in its open state or its closed state. The second string controller 98 is operably coupled (e.g., electrically connected) with the second string contactor 88B. The second string controller 98 is operable to selectively configure the second string contactor 88B in its open state or its closed state. The processing system 100 is connected in signal communication with the first string controller 96 and the second string controller 98. While the string assembly 94 of FIG. 4A is described herein with two string controllers - the first string controller 96 and the second string controller 98 - the string assembly 94 may alternatively include a single string controller (e.g., the first string controller 96).

As shown in FIG. 4B, the string assembly 94 may additionally or alternatively include a plurality of substring assemblies 102. Each of the substring assemblies 102 of FIG. 4B includes a battery substring 104, a first substring contactor 106A, a second substring contactor 106B (collectively the substring contactors 106), the first string controller 96, and the second string controller 98. However, in some embodiments, the substring assemblies 102 may include a single substring contactor (e.g., the first substring contactor 106A) and a single string controller (e.g., the first string controller 96). The battery substrings 104 of each of the respective substring assemblies 102 are electrically connectable together to form the respective one of the battery strings 74.

The first substring contactor 106A and the second substring contactor 106B are configured to facilitate selective control of electrical current flow for the respective battery substring 104. Similar to the contactors 86, 88, the substring contactors 106 are selectively configurable (e.g., switchable) in and between a closed state or an open state to conduct or interrupt an electrical current flow, respectively. The first substring contactor 106A is electrically connected between the battery substring 104 and the string contactor 88A on the positive string line 80A. The second substring contactor 106B is electrically connected between the battery substring 104 and the string contactor 88B on the negative string line 80B.

For each of the substring assemblies 102, the first string controller 96 is electrically connected with the first substring contactor 106A and the second string controller 98 is electrically connected with the second substring contactor 106B. The first string controller 96 is operable to selectively configure the first substring contactor 106A in its open state or its closed state. The second string controller 98 is operable to selectively configure the second string contactor 88B in its open state or its closed state. The processing system 100 is connected in signal communication with the first string controller 96 and the second string controller 98. While each of the substring assemblies 102 of FIG. 4B are described herein with two string controllers - the first string controller 96 and the second string controller 98 - the substring assemblies 102 may alternatively include a single string controller (e.g., the first string controller 96).

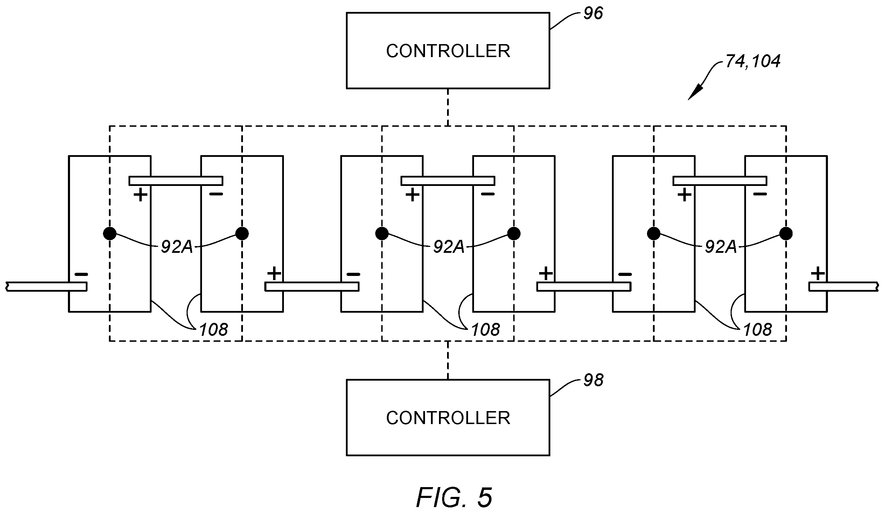

FIG. 5 schematically illustrates a portion of one of the battery strings 74. Each of the battery strings 74 includes a plurality of battery cells 108 electrically connected together in series and/or parallel to form the respective battery string 74. The battery cells 108 may be arranged as a plurality of interconnected battery modules with each battery module including a subset of the battery cells 108 electrically connected together as a discrete battery unit. Similarly, the battery cells 108 and/or interconnected battery modules may be arranged to form the battery substrings 104 of a respective one of the battery strings 74. The battery cells 108 may be understood to as a smallest discrete unit of the battery 64 configured to convert chemical energy to electrical energy and vice versa (e.g., each of the battery cells 108 may include a cathode, an anode, and an electrolyte). The battery cells 108 may be configured as cylindrical cells, pouch cells, prismatic cells, and the like, and the present disclosure is not limited to any particular configuration of the battery cells 108. The battery 64 (e.g., and its battery cells 108) is configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like.

As shown in FIG. 5, for example, the battery sensor assembly 92 includes a cell temperature sensor 92A for each of the battery cells 108. The cell temperature sensor 92A may be configured as a resistance temperature detector (RTD), a thermocouple, or another suitable temperature sensor. The first string controller 96 and the second string controller 98 are connected in signal communication with the cell temperature sensor 92A of each of the battery cells 108 of a respective one of the battery strings 74 or substrings 104. The first string controller 96 and the second string controller 98 of FIG. 5 are connected in signal communication with a same cell temperature sensor 92A of each of the battery cells 108; however, the first string controller 96 and the second string controller 98 may alternatively be connected in signal communication with discrete cell temperature sensors of each of the battery cells 108. The battery sensor assembly 92 may include additional battery sensors configured to measure operating parameters of the battery 64 such as, but not limited to, battery 64 voltage and current, battery string 74 voltage and current, and the like.

Each of the string controllers 96, 98 is configured to receive the cell temperature inputs for each of the battery cells 108 of the respective one of the battery strings 74 or substrings 104 and compare the cell temperature inputs to a temperature threshold input transmitted to the string controllers 96, 98 from the processing system 100.

The first string controller 96 and/or the second string controller 98 may be configured as a simple electronic hardware (SEH) controller. As used herein, the term "simple electronic hardware (SEH)" refers to electronic hardware that is fully analyzable and testable. Electronic hardware may be classified as simple electronic hardware (SEH), for example, under Radio Technical Commission for Aeronautics Design Assurance Guidance for Airborne Electronic Hardware (DO-254) and/or European Organisation for Civil Aviation Equipment (EUROCAE) Design Assurance Guidance for Airborne Electronic Hardware ED-80 standards, if a comprehensive combination of deterministic tests and analyses appropriate to the design assurance level (DAL) of the electronic hardware can ensure correct functional performance under all foreseeable operating conditions with no anomalous behavior. Performance testing of simple electronic hardware (SEH) may include methods such as visual inspection, basic input-output testing, or straightforward analysis to conclusively establish that the electronic hardware performs as expected without the need for advanced analytical verification methods such as simulation or other complex analytical processes which may be necessary for complex electronic hardware (CEH). Simple electronic hardware (SEH) may typically lack complex state behavior, such as embedded processors or field-programmable gate arrays (FPGAs) with intricate logic. Simple electronic hardware (SEH) may include electronic hardware such as, but not limited to, discrete logic circuits (e.g., simple logic gates which perform only straightforward, predictable functions which can be easily analyzed and tested), signal conditioners (e.g., electronic hardware which prepares or conditions signals without modifying their fundamental characteristics), power regulators or simple power distribution circuits, basic analog circuits (e.g., operational amplifiers with a clear input-output relationship), relays and switches (e.g., mechanical or solid-state relays that control the on/off state of electrical circuits), basic communication interfaces facilitating limited data transmission (e.g., universal asynchronous receiver-transmitters (UARTs) with no advanced protocol handling), and the like. The first string controller 96 and/or the second string controller 98 may alternatively be configured as a complex electronic hardware (CEH) controller. Complex electronic hardware may be understood as any electronic hardware item that cannot be classified as simple electronic hardware, for example, because it may include hardware features which cannot be exhaustively verified to ensure correct behavior under all computable operating conditions.

The processing system 100 includes a processor 110 connected in signal communication with memory 112. The processor 110 may include any type of computing device, computational circuit, processor(s), central processing unit (CPU), graphics processing unit (GPU), computer, or the like capable of executing a series of instructions that are stored in memory 112. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the processing system 100 and its processor 110 to accomplish the same algorithmically and/or coordination of electrical assembly 24 components including, but not limited to, the string controllers 96, 98. The memory 112 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the processing system 100. The processing system 100 may include, or may be in communication with, a user interface including one or more inputs devices and/or one or more output devices, for example, an input device that enables a user to enter data and/or instructions and an output device configured to display information (e.g., a visual display or a printer), or to transfer data, etc. Communications between the processing system 100 and external electrical or electronic devices may be via a hardwire connection or via a wireless connection. A person of skill in the art will recognize that portions of the processing system 100 may assume various forms (e.g., digital signal processor, analog device, etc.).

The processing system 100 is configured to execute a machine learning model 114 (e.g., through execution by the processor 110 of the instructions stored in the memory 112) trained to dynamically determine the cell temperature threshold received and applied by the string controllers 96, 98 to control operation of the string contactors 88 and/or the substring contactors. The machine learning model 114 may take the form of a neural network, a digital twin model, or another suitable mathematical model configured to be trained to make battery cell 108 overtemperature condition predictions using battery input data 116 for the battery 64. The battery input data 116 may be stored in the memory 112, transmitted to the processing system 100 from the BMS controller 90, or otherwise received by the processing system 100. The model 114 may be trained using a supervised learning methodology and/or an unsupervised learning methodology. The model 114 trained using a supervised learning methodology may be prepared using a training process that includes making predictions based on a body of data, such as a training set of labeled, historical battery data (e.g., battery cell temperature data, charging data, discharging data, battery aging data, overtemperature condition and/or thermal runaway data, etc.), and refining those predictions until the model 114 achieves a desired level of accuracy. The refining process may typically include testing and validating the model 114 using the historical battery data. In contrast to a supervised learning methodology, an unsupervised learning methodology may use unlabeled battery data to make predictions based on patterns that exist within the battery data. The process of generating the patterns may use various techniques, including but not limited to cluster analysis (e.g., hierarchical clustering, k-means, mixture models, DBSCAN, OPTICS, and the like), principal component, etc. The present disclosure is not limited to using any particular unsupervised learning methodology. Accordingly, the model 114 may be trained to correlate the battery cell 108 temperatures to operating conditions of the aircraft 1000 and its propulsion system 20 and electrical assembly 24. Based on the training, the model 114 may be configured to determine an expected temperature range for the battery cell 108 temperatures corresponding to a given set of operating conditions and, correspondingly, a temperature (e.g., temperature threshold) which is indicative of an overtemperature condition of the battery cells 108.

During operation of the electrical assembly 24, the cell temperatures of the battery cells 108 may be monitored using the cell temperature sensor 92A for each of the battery cells 108 to facilitate continued safe operation of the battery 64. Battery cells, and particularly those having a lithium-ion chemistry, may be susceptible in some rare cases to thermal runaway, wherein the battery cell enters an uncontrollable self-heating state. Of course, temperature monitoring and control of battery cells may also be important for cell configurations and chemistries other than lithium-ion cells. Accordingly, monitoring the cell temperatures of the battery cells 108 may be useful for identifying battery cell 108 overtemperature conditions, and thereby preventing or reducing the severity of thermal runaway events. However, battery cell operating temperatures may vary significantly across a range of different aircraft 1000, propulsion system 20, and electrical assembly 24 operating conditions. Accordingly, temperature values indicative of overtemperature conditions may change during operation. For example, a battery cell temperature indicative of an overtemperature condition in one operating context may be a normal operating temperature of the battery cell in another operating context.

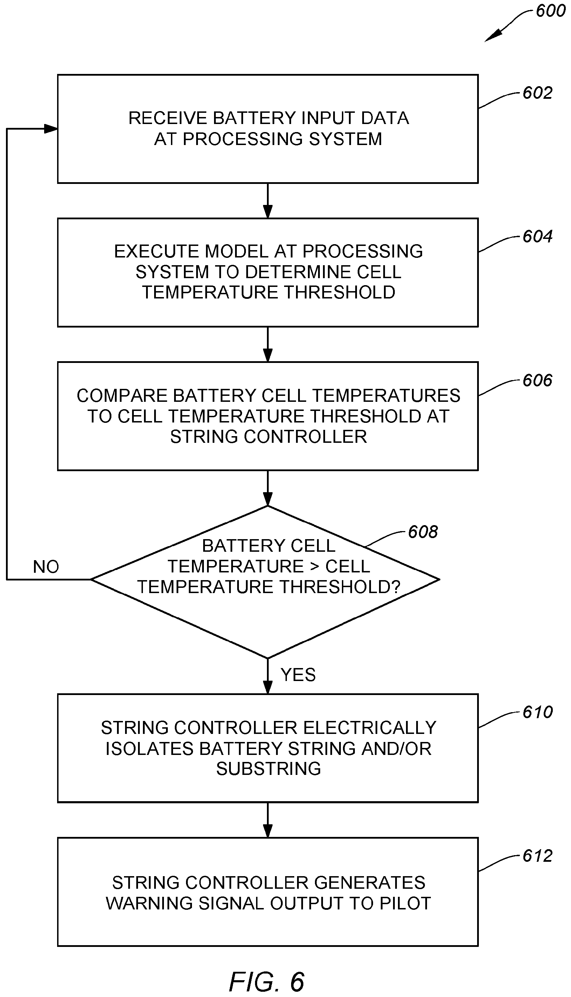

Referring to FIGS. 4A, 4B, 5, and 6, a thermal protection method 600 for a battery (e.g., the battery 64) is provided. FIG. 6 illustrates a flowchart for the method 600. The method 600 may be performed for the propulsion system 20 and/or the electrical assembly 24, as described herein. The string controllers 96, 98 and the processing system 100 may be used to execute or control one or more steps of the method 600. Unless otherwise noted herein, it should be understood that the steps of method 600 are not required to be performed in the specific sequence in which they are discussed below and, in some embodiments, the steps of method 600 may be performed separately or simultaneously.

In step 602, the processing system 100 receives the battery input data 116. The battery input data 116 may include historical data, specification data, and/or operational data for the battery 64. Examples of the historical data include battery cell age (e.g., degradation) data, battery 64 test data, battery temperature data (e.g., average cell temperatures, cell temperatures relative to expected temperatures, etc.) for the battery 64, aircraft and propulsion system flight data, and battery cell performance trends. Examples of the specification data include manufacturer-provided battery cell specifications, battery cell operating voltage, current, and temperature ranges, and a quantity of the battery cells 108 on service in the respective battery string 74 or battery substring 104. The operational data for the battery 64 includes real-time battery 64 operating parameters, for example, battery cell 108 temperatures, battery 64, battery string 74 and/or battery substring 104 voltages and currents, battery charge data (e.g., charging rate), battery discharge data (e.g., discharge rate), or the like.

Step 604 includes, by the processing system 100 (e.g., the processor 110), executing the model 114 and dynamically determining the cell temperature threshold with the model using the battery input data 116 (see step 602). The cell temperature threshold is indicative of an overtemperature condition of the battery cells 108 for the current operating conditions and state of the battery 64. The processing system 100 may automatically and continuously determine the cell temperature threshold using the battery input data 116 and transmit the determined cell temperature threshold to the string controllers 96, 98.

Step 606 includes the string controllers 96, 98 comparing the battery cell temperatures of the battery cells 108 (e.g., received from the cell temperature sensors 92A) in the respective battery string 74 or battery substring 104 to the cell temperature threshold input to the string controllers 96, 98 from the processing system 100. In step 608, the string controllers 96, 98 each identify a presence or an absence of an overtemperature condition in the respective battery string 74 or battery substring 104. The presence of the overtemperature condition is identified where the battery cell temperature of one of the battery cells 108 of the respective battery string 74 or battery substring 104 is greater than or equal to the cell temperature threshold. Alternatively, the presence of the overtemperature condition may be identified where at least a threshold quantity (e.g., subset plurality) of the battery cells 108 of the respective battery string 74 or battery substring 104 have a battery cell temperature which is greater than or equal to the cell temperature threshold. Upon identifying the presence of the overtemperature condition, in step 610 the string controllers 96, 98 control the respective string contactors 88 or substring contactors 106 to their open state to electrically isolate the battery string 74 or battery substring 104 including the overtemperature battery cells. The absence of the overtemperature condition may be identified where the battery cell temperatures of each of the battery cells 108 of the respective battery string 74 or battery substring are less than the cell temperature threshold.

Step 612 includes generating a warning signal (e.g., an audible alarm, a warning light, etc.) for a pilot or other operator of the aircraft 1000. As shown in FIGS. 4A and 4B, each of the string controllers 96, 98 may be connected in signal communication with a cockpit control system 1002 of the aircraft 1000. Upon identifying the presence of the overtemperature condition, the string controllers 96, 98 may generate and transmit the warning signal to the cockpit control system 1002.

In some embodiments, the processing system 100 may additionally dynamically determine a second cell temperature threshold (e.g., a contactor closing threshold) with the model using the battery input data 116 (see step 602). This second cell temperature threshold may be indicative of a (e.g., lower) temperature at which the respective battery string 74 or substring can safely be placed on service. The processing system 100 may automatically and continuously determine the second cell temperature threshold using the battery input data 116 and transmit the second cell temperature threshold to the string controllers 96, 98. The string controllers 96, 98 may be operable to compare the battery cell temperatures to the second cell temperature threshold and, with each of the battery cell temperatures less than or equal to the second cell temperature threshold, control the respective string contactors 88 or substring contactors 106 to their closed state.

In some embodiments, the processing system 100 may alternatively be configured to receive and compare the battery cell temperatures of the battery cells 108 (e.g., received from the cell temperature sensors 92A) in the respective battery string 74 or battery substring 104 to the cell temperature threshold to identify the presence or the absence of the overtemperature condition. In response to identifying the presence of the overtemperature condition, the processing system 100 may generate and transmit an overtemperature condition signal to the string controllers 96, 98 (e.g., SEH controllers). The string controllers 96, 98 may, in turn, be operable to receive the overtemperature condition signal and, in response to receiving the signal, control the respective string contactors 88 or substring contactors 106 in their open states.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly (24) for an aircraft (1000), the assembly (24) comprising:
a battery (64) including a plurality of battery strings (74) configured to be electrically connected together in parallel at a first main battery line (78A), wherein the plurality of battery strings (74) includes a first battery string (74), and the first battery string (74) includes a plurality of battery cells (108) electrically connected together;
a temperature sensor (92A) operable to measure a temperature of one or more of the plurality of battery cells (108);
a first contactor (88A) electrically connected between the first battery string (74) and the first main battery line (78A), the first contactor (88A) configurable in an open state and a closed state;
a first string controller (96) connected in signal communication with the temperature sensor (92A), wherein the first string controller (96) is operably coupled with the first contactor (88A), the first string controller (96) is operable to selectively configure the first contactor (88A) in the open state or the closed state, the first string controller (96) is further operable to receive a cell temperature threshold, compare the temperature from the temperature sensor (92A) to the cell temperature threshold, and configure the first contactor (88A) in the open state in response to identifying the temperature is greater than or equal to the cell temperature threshold; and
a processing system (100) including a processor (110) connected in signal communication with a non-transitory memory storing instructions which, when executed by the processor (110), cause the processor (110) to:
execute a model (114) trained to determine the cell temperature threshold;
dynamically determine the cell temperature threshold with the model (114) using battery input data (116) for the battery (64); and
transmit the cell temperature threshold to the first string controller (96).

2. The assembly (24) of claim 1, further comprising a second contactor (88B) and a second string controller (98), wherein the second contactor (88B) is electrically connected between the first battery string (74) and the first main battery line (78B), the second contactor (88B) is configurable in the open state and the closed state, the second string controller (98) is connected in signal communication with the temperature sensor (92A), the second string controller (98) is operably coupled with the second contactor (88B), the second string controller (98) is operable to selectively configure the second contactor (88B) in the open state or the closed state, and the second string controller (98) is further operable to receive the cell temperature threshold, compare the temperature from the temperature sensor (92A) to the cell temperature threshold, and configure the second contactor (88B) in the open state in response to identifying the temperature is greater than or equal to the cell temperature threshold.

3. The assembly (24) of claim 1 or 2, further comprising a cockpit control system (1002) connected in signal communication with the first string controller (96), wherein the first string controller (96) is configured to generate and transmit a warning signal to the cockpit control system (1002) in response to the identifying the temperature is greater than or equal to the cell temperature threshold.

4. The assembly (24) of any preceding claim, further comprising a plurality of temperature sensors (92A) including the temperature sensor (92A), wherein the plurality of temperature sensors (92A) are configured to measure the temperature of each of the plurality of battery cells (108), the first string controller (96) is connected in signal communication with each of the plurality of temperature sensors (92A), the first string controller (96) is further operable to compare the temperature from each of the plurality of temperature sensors (92A) to the cell temperature threshold and configure the first contactor (88A) in the open state in response to identifying the temperature of any of the plurality of battery cells (108) is greater than or equal to the cell temperature threshold.

5. The assembly (24) of any preceding claim, wherein the instructions, when executed by the processor (110), further cause the processor (110) to dynamically determine a contactor closing threshold with the model (114) using the battery input data (116), and transmit the contactor closing threshold to the first string controller (96).

6. The assembly (20) of any preceding claim, further comprising a propulsor (26), an electric motor (62), and an electrical distribution system (66), wherein the electric motor (62) is coupled with the propulsor (26), and the electrical distribution system (66) is configured to electrically interconnect the electric motor (62) with the battery (64).

7. A thermal protection method (600) for an aircraft battery (64), the thermal protection method (600) comprising:
receiving, at a processor (110) of a processing system (100), battery input data (116) of a battery (64), wherein the battery (64) includes a plurality of battery strings (74) configured to be electrically connected together in parallel at a first main battery line (78A), each of the plurality of battery strings (74) includes a plurality of battery cells (108) electrically connected together, and the plurality of battery strings (74) includes a first battery string (74);
monitoring, with a first string controller (96), a temperature of one or more of a plurality of battery cells (108) of the first battery string (74) and a cell temperature threshold, wherein the first string controller (96) is operably coupled with a first contactor (88A) electrically connected between the first battery string (74) and the first main battery line (78A), and the first contactor (88A) is configurable in an open state and a closed state;
executing, by the processor (110), a model (114) trained to determine the cell temperature threshold and dynamically determine the cell temperature threshold using the battery input data (116);
transmitting, from the processor (110), the cell temperature threshold to the first string controller (96);
comparing, by the first string controller (96), the temperature to the cell temperature threshold; and
identifying, by the first string controller (96), a presence or an absence of an overtemperature condition, wherein the presence of the overtemperature condition is identified where the temperature is greater than or equal to the cell temperature threshold.

8. The assembly (24) of any preceding claim or the thermal protection method (600) of claim 7, wherein the first string controller (96) is a simple electronic hardware (SEH) controller.

9. The assembly (24) of any preceding claim or the thermal protection method (600) of claim 7 or 8, wherein the battery input data (116) includes operational data of the battery (64) and one or both of historical battery data of the battery or specification data of the battery (64).

10. The assembly (24) or thermal protection method (600) of claim 9, wherein the operational data includes one or more of battery voltage data, battery current data, battery charging data, or battery discharging data.

11. The assembly (24) of any preceding claim or the thermal protection method (600) of any of claims 7 to 10, wherein the first battery string (74) includes a plurality of battery substrings (104) electrically connected together to form the first battery string (74), the plurality of battery substrings (104) includes a first battery substring (104), and the first contactor (88A) is electrically connected between the first battery substring (104)and the first main battery line (78A).

12. The thermal protection method (600) of any of claims 7 to 11, further comprising:
monitoring, with a second string controller (98), the temperature of one or more of a plurality of battery cells (108) of the first battery string (74) and the cell temperature threshold, wherein the second string controller (98) is operably coupled with a second contactor (88B) electrically connected between the first battery string (74) and the first main battery line (78B), and the second contactor (88B) is configurable in the open state and the closed state; and
controlling, by the second string controller (98), the second contactor (88B) in the open state in response to identifying the presence of the overtemperature condition.

13. The thermal protection method (600) of any of claims 7 to 12, further comprising:
executing, by the processor (110), the model (114) trained to determine a contactor closing threshold and dynamically determining the contactor closing threshold using the battery input data (116); and
transmitting, from the processor (110), the contactor closing threshold to the first string controller (96).

14. The thermal protection method (600) of any of claims 7 to 13, further comprising driving a propulsor (26) with an electric motor (62) electrically connected with the battery (64) while performing the steps of receiving the battery input data (116), monitoring the temperature, executing the model (114) and dynamically determining the cell temperature threshold, comparing the temperature to the cell temperature threshold, and identifying the presence or the absence of the overtemperature condition.

15. An assembly (24) for an aircraft (1000), the assembly (24) comprising:
a battery (64) including a plurality of battery strings (74) configured to be electrically connected together in parallel at a first main battery line (78A), wherein the plurality of battery strings (74) includes a first battery string (74), and the first battery string (74) includes a plurality of battery cells (108) electrically connected together;
a temperature sensor (92A) operable to measure a temperature of one or more of the plurality of battery cells (108);
a first contactor (88A) electrically connected between the first battery string (74) and the first main battery line (78A), the first contactor (88A) configurable in an open state and a closed state;
a first string controller (96) connected in signal communication with the temperature sensor (92A), wherein the first string controller (96) is operably coupled with the first contactor (88A), the first string controller (96) is operable to selectively configure the first contactor (88A) in the open state or the closed state, and the first string controller (96) is further operable to receive an overtemperature condition signal and, in response to receiving the overtemperature condition signal, configure the first contactor (88A) in the open state; and
a processing system (100) including a processor (110) connected in signal communication with a non-transitory memory storing instructions which, when executed by the processor (110), cause the processor (110) to:
execute a model (114) trained to determine a cell temperature threshold;
dynamically determine the cell temperature threshold with the model (114) using battery input data (116) for the battery (64);
compare the temperature from the temperature sensor (92A) to the cell temperature threshold; and
transmit the overtemperature condition signal to the first string controller (96) in response to the temperature greater than or equal to the cell temperature threshold, optionally, wherein the first string controller (96) is a simple electronic hardware (SEH) controller.
